# EUROPÄISCHE PATENTSCHRIFT

(11) **EP 1 455 108 B1**
(45) Veröffentlichungstag und Bekanntmachung des Hinweises auf die Patenterteilung: **30.08.2006**
(21) Anmeldenummer: 04004632.8
(22) Anmeldetag: 01.03.2004
(51) Int. Cl.: F16D 48/06

(54) **Verfahren zur Steuerung einer Kupplung**
Method of controlling a clutch
Procédé pour contrôller un embrayage

(30) Priorität: 06.03.2003 DE 10309723
(43) Veröffentlichungstag der Anmeldung: 08.09.2004
(73) Patentinhaber: LuK Lamellen und Kupplungsbau Beteiligungs KG, 77815 Bühl (DE)
(72) Erfinder: Benz, Jürgen, 77704 Oberkirch (DE); Berger, Reinhard, Dr., 77815 Bühl (DE)

(56) Entgegenhaltungen:
- EP-A- 0 937 904
- WO-A-03/076227
- DE-A- 3 041 501
- DE-A- 4 011 850
- DE-A- 10 221 701
- DE-A- 19 532 946

## Beschreibung

Die vorliegende Erfindung betrifft ein Verfahren zur Steuerung einer Kupplung, die zwischen einem Antriebsmotor und einem automatischen Schaltgetriebe eines Antriebsstranges angeordnet ist.

Aus dem Stand der Technik sind Antriebsstränge für Kraftfahrzeuge bekannt, bei denen ein Schaltgetriebe über eine Kupplung mit dem Antriebsmotor verbunden ist, wobei sowohl Schaltgetriebe als auch Kupplung automatisiert betätigt werden. Derartige Getriebe bzw. Antriebsstränge werden allgemein als automatisierte Schaltgetriebe bezeichnet. Hierzu zeigt die DE 3041 501 Fahrzeug, bei dem ein mechanisches Schaltgetriebe, das mittels eines Stellmotors geschaltet wird, indem die Stellung des Fahrpedals ausgewertet wird. Dabei kann bei nicht betätigtem Fahrpedal die ebenfalls automatisierte Kupplung geöffnet werden.

Fahrzeuge, bei denen Motor und Abtrieb über eine Reibkupplung verbunden sind, lassen sich bei Lastwechseln zu Schwingungen zwischen Motor und Antriebsstrang gegenüber dem Fahrzeug anregen. Gerade bei großen Übersetzungen, dies ist gemeinhin bei kleinen Geschwindigkeiten der Fall, sind diese Schwingungen am Abtrieb spürbar. Während dieser Effekt bei Handschaltgetrieben vom Fahrer akzeptiert wird, ist bei automatisierten Systemen der Komfortanspruch deutlich höher.

Aufgabe der vorliegenden Erfindung ist es daher, Schwingungen bei Lastwechseln zu verringern.

Dieses Problem wird bei einem automatischen Schaltgetriebe mit einem manuellen und einem automatischen Fahrprogramm durch ein Verfahren zur Steuerung einer Kupplung nach Anspruch 1. Während eines ZugSchubwechsels wird die Kupplung im automatischen Fahrprogramm geöffnet und somit die Schwingung gedämpft. Im manuellen Fahrprogramm wird das Öffnen der Kupplung unterdrückt. Der Wechsel vom geöffneten Triebstrang zum normalen Fahren mit geschlossenem Triebstrang muss dabei bei geeigneten Bedingungen durchgeführt werden. Derartige Bedingungen sind sowohl die Übergangsbedingungen Fahren zum Freilauf als auch Strategien zur Steuerung des Übergangs Freilauf hin zu Fahren. Vorzugsweise wird die Kupplung zur Realisierung der Freilauffunktion geöffnet weitere. Eintrittsbedingungen für die Freilauffunktion können sein, dass der Fahrgang kleiner oder gleich einem maximalen Fahrgang ist und/oder dass die Kupplung zur Realisierung der Freilauffunktion geöffnet wird, wenn das Fahrpedal nicht betätigt wird, und/oder dass ein Leerlaufschalter aktiviert ist und/oder dass das Fahrerwunschmoment kleiner als Null ist und/oder dass zusätzlich die Geschwindigkeit kleiner als die maximale Freilaufgeschwindigkeit ist und/oder wenn keine Bergab-Fahrt durch eine Steuereinrichtung oder dergleichen erkannt wird und/oder dass eine Kriechfunktion nicht aktiviert ist und/oder dass keine Sperrung der Freilauffunktion vorliegt.

Um zu verhindern, dass das Fahrzeug aus dem Schubbetrieb kommend plötzlich und für den Fahrer unerwartet in den Freilauf übergeht, kann die Freilauffunktion mit einer oder mehreren der folgenden weiterer Bedingungen gesperrt werden: wenn die Fahrgeschwindigkeit größer als die maximale Freilaufgeschwindigkeit ist, oder wenn ein Bergprogramm aktiviert ist. Hier können auch weitere Bedingungen herangezogen werden.

Die Sperrung bleibt so lange aktiv, bis mindestens eine der folgenden Bedingungen erfüllt ist: wenn das Fahrpedal betätigt wird oder das Fahrerwunschmoment größer als Null ist, wenn ein Wechsel von einem manuellen in ein Automatik-Fahrprogramm erfolgt oder wenn ein Gangwechsel mit einem Fahrgang kleiner oder gleich dem maximalen Freilaufgang erfolgt. Auch hier können weitere Bedingungen herangezogen werden.

Das eingangs genannte Problem wird auch durch einen Antriebsstrang insbesondere für ein Kraftfahrzeug umfassend einen Antriebsmotor, ein Schaltgetriebe und eine diese verbindende Kupplung gelöst, bei dem der Antriebsstrang eine Steuerung zur Durchführung des erfindungsgemäßen Verfahrens umfasst.

Nachfolgend werden Ausführungsbeispiele der Erfindung anhand der beiliegenden Zeichnungen näher beschrieben. Dabei zeigen:
- Fig. 1: einen Drehzahlverlauf über der Zeit beim Übergang in den Freilauf;
- Fig. 2: einen Momentenverlauf über der Zeit beim Übergang in den Freilauf;
- Fig. 3: einen Drehzahlverlauf beim Wiedereinkuppeln ohne Motor-Momenteneingriff;
- Fig. 4: einen Drehmomentenverlauf beim Wiedereinkuppeln ohne Motor-Momenteneingriff;
- Fig. 5: einen Drehzahlverlauf über der Zeit beim Wiedereinkuppeln mit Motor-Momenteneingriff;
- Fig. 6: einen Momentenverlauf beim Wiedereinkuppeln mit Motor-Momenteneingriff;
- Fig. 7: ein Flussdiagramm zum Ablauf der Freilauffunktion;
- Fig. 8: ein Flussdiagramm zur Bestimmung der Freilaufsperre.

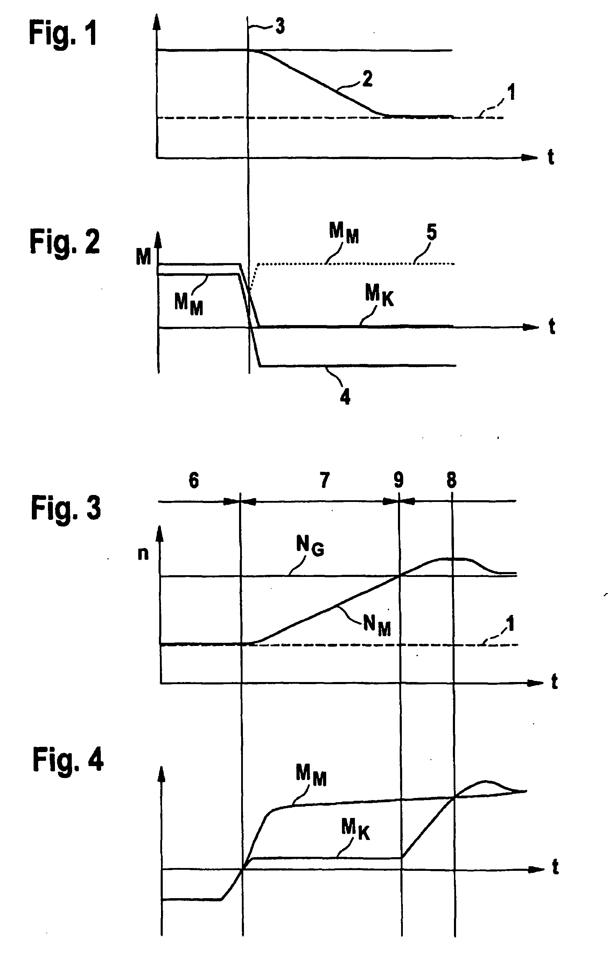

Die Darstellungen der Figuren 1 bis 6 sind jeweils schematisierte Darstellungen des Verlaufs der Drehzahl n sowie des Motormomentes M über der Zeit t des Motors.

Dargestellt in Fig. 1 ist die Leerlaufdrehzahl 1 sowie die Motordrehzahl 2 über der Zeit t. Mit dem Beginn der Freilaufphase 3, die als senkrechter Strich in Fig. 1 dargestellt ist, wird die Fahrzeugkupplung, die einen hier nicht näher dargestellten bekannten Antriebsmotor mit einem hier nicht näher dargestellten automatisierten Schaltgetriebe verbindet, geöffnet. Die Steuerung der Kupplung erfolgt automatisiert durch einen beispielsweise elektrischen Aktuator. Die Schaltung des Schaltgetriebes erfolgt ebenfalls durch beispielsweise elektrisch angetriebene Aktuatoren. Ein derartiger Antriebsstrang bzw. das zugehörige Getriebe und dessen Schaltung wird allgemein als automatisiertes Schaltgetriebe bezeichnet. Wie aus Fig. 1 zu erkennen ist, fällt die Motordrehzahl n nach Beginn der Freilaufphase 3 auf die Leerlaufdrehzahl 1 ab.

Aus Fig. 2 ist der zugehörige Momentenverlauf M über der Zeit t zu erkennen. Dargestellt ist das Motormoment M_{M} sowie das Kupplungsmoment M_{K}. Wie zu erkennen ist, sinkt das Kupplungsmoment mit Beginn der Freilaufphase 3, die wie in Fig. 1 durch eine senkrechte Linie dargestellt ist, auf ein Kupplungsmoment M_{K} von Null ab, während das Motormoment M_{M} auf ein Freilaufmoment 5 ansteigt, nachdem die Kupplung endgültig geöffnet ist. Zum Vergleich dargestellt ist der Momentenverlauf M_{M} im regulären Schubbetrieb, in diesem Fall wird ein negatives Schleppmoment 4 über die Kupplung auf den Motor übertragen.

Fig. 3 zeigt das Wiedereinkuppeln ohne Motoreingriff, wobei die Drehzahl des Motors vor dem Einkuppeln an die Drehzahl der Getriebeeingangswelle angeglichen wird. Ziel ist dabei, ein für den Fahrer praktisch unmerkliches Einkuppeln zu gewährleisten. Dargestellt in Fig. 3 ist die Drehzahl n über der Zeit t. Als waagerechte Linie eingezeichnet ist die Getriebedrehzahl N_{G}. Entsprechend der Darstellung der Fig. 1 als waagerechte Linie ist ebenfalls eingezeichnet die Leerlaufdrehzahl 1 des Motors. Über die Zeit dargestellt sind die Freilaufphase 6, die Hochlaufphase 7 sowie die Einkuppelphase 8. Während der Hochlaufphase wird die Motordrehzahl n_{M} erhöht, so dass diese während der Einkuppelphase oberhalb der Getriebedrehzahl liegt. Die Getriebedrehzahl wird an der Kupplung gemessen. Mit stetigem Schließen der Kupplung ab einem Kupplungschließzeitpunkt 9 sinkt die Drehzahl bis zum vollständigen Schließen der Kupplung auf die Getriebedrehzahl N_{G} ab.

In Fig. 4 sind das zugehörige Motormoment M_{M} sowie das zugehörige Kupplungsmoment M_{K} eingezeichnet. Das Kupplungsmoment M_{K} wird während der Hochlaufphase des Motors auf einen vergleichsweise geringen Wert zur Verspannung des Antriebsstrangsund dann während der Einkuppelphase auf das Motormoment M_{M} und kurzfristig gar darüber hinaus gesteuert. Im eingekuppelten Zustand entspricht das Kupplungsmoment M_{K} dem Motormoment M_{M}.

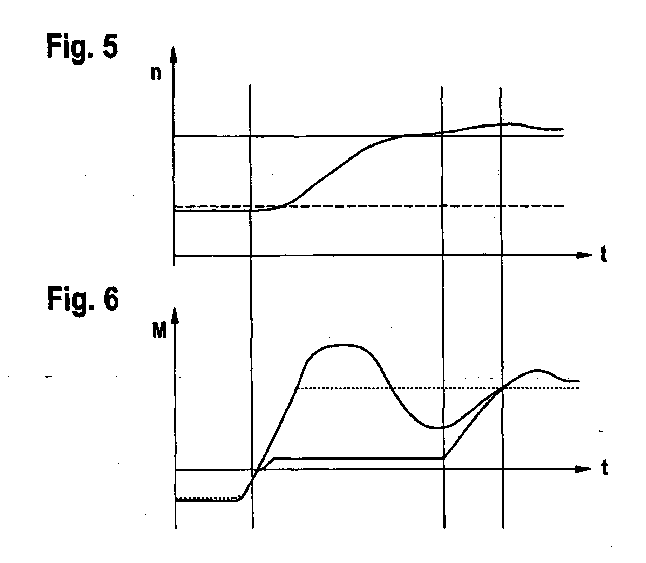

Die Figuren 5 und 6 zeigen analog der vorherigen Darstellungen Drehzahl n sowie Moment M über der Zeit t. Im Unterschied zur Darstellung der Figuren 3 und 4 erfolgt in der Darstellung der Figuren 5 und 6 ein Wiedereinkuppeln mit Motor-Momenteingriff. Der Drehzahlverlauf, dargestellt in Fig. 5, folgt in etwa dem in Fig. 3 dargestellten Drehzahlverlauf. Bei dem in Fig. 6 dargestellten Momentenverlauf ist jedoch zu erkennen, dass das Motormoment nicht auf einem konstanten Wert geregelt wird, um sodann in die Einkuppelphase 8 einzutreten, sondem zunächst auf einen relativ hohen geregelten Wert, der dann nach Beginn der Einkuppelphase wieder auf einen vergleichsweise niedrigen Wert runtergeregelt wird.

Als Eintrittsbedingung für die Freilauffunktion können unterschiedliche Parameter gewählt werden. Zum einen soll der Fahrgang kleiner oder gleich einem maximalen Freilaufgang sein. Der maximale Freilaufgang ist ein vorbestimmter höchster Gang, in dem der Antriebsstrang in die Freilauffunktion überführt werden darf. Des Weiteren darf das Fahrpedal nicht betätigt werden, ein Leerlaufschalter ist durch den Fahrer aktiv zu schalten oder das Fahrerwunschmoment soll kleiner Null sein. Eine zusätzliche Bedingung ist, dass die Fahrgeschwindigkeit kleiner als eine maximale Freilaufgeschwindigkeit ist. Oberhalb der maximalen Freilaufgeschwindigkeit wird das Fahrzeug ebenfalls nicht in die Freilauffunktion überführt. Die Freilauffunktion wird ebenfalls nicht eingeschaltet, wenn eine Bergab-Fahrt erkannt wurde. Die Freilauffunktion wird nur eingeschaltet, wenn ein Automatik-Fahrprogramm gewählt ist und keine Kriechfunktion aktiviert ist. Um zu verhindern, dass das Fahrzeug aus dem Schubbetrieb kommend plötzlich und für den Fahrer unerwartet in den Freilauf übergeht, wird die Freilauffunktion bei Eintritt verschiedener Bedingungen gesperrt. Eine Sperrung erfolgt, wenn die Fahrgeschwindigkeit größer als die maximale Freilaufgeschwindigkeit ist. Ebenso erfolgt eine Sperrung, wenn kein Automatik-Fahrprogramm gewählt wurde und wenn ein Bergprogramm aktiviert ist. Die Sperrung bleibt so lange aktiv, bis das Fahrpedal betätigt wird oder das Fahrerwunschmoment größer Null ist, bis ein Wechsel von einem manuellen Fahrprogramm in ein Automatik-Fahrprogramm erfolgt oder bis ein Gangwechsel mit einem Fahrgang kleiner oder gleich dem maximalen Freilaufgang erfolgt. Sobald eine der Eintrittsbedingungen nicht mehr erfüllt ist, wird wieder eingekuppelt. Dabei muss zwischen Schub- und Zugbetrieb unterschieden werden. Im Schubbetrieb wird die Kupplung langsam geschlossen bzw. ein Kriechmoment aufgebaut.

Ist beim Austritt aus dem Freilauf des Fahrpedal betätigt, so schließt die Kupplung erst dann, wenn die Motordrehzahl über der Getriebeeingangsdrehzahl liegt. Die Einkuppelfunktion im Zugbetrieb ist komfortkritisch, da der Fahrer während des Hochdrehens des Motors das gewünschte Abtriebsmoment nicht erhält und danach relativ schnell eingekuppelt werden muss, um ein Wegdrehen des Motors zu verhindern.

Es hat sich als günstig erwiesen, während des Hochdrehens die Kupplung bereits leicht, nur wenige Newtonmeter, anzulegen. Damit kann zum einen die Totzeit zur Überbrückung des Luftweges der Kupplung verringert werden und zum anderen der Spieldurchlauf der Eingangswelle definiert bei kleinem Moment durchlaufen werden.

Betätigt der Fahrer das Fahrpedal nur leicht, kann mit einer positiven Momentenanforderung an die Motorsteuerung ein schneller Drehzahlangleich erreicht werden und somit die Hochlaufphase verkürzt werden.

Das Einkuppeln muss so schnell sein, dass ein Überdrehen des Motors verhindert werden kann. Mit einer reduzierten Momentenanforderung an die Motorsteuerung können unsanfte Einkuppelvorgänge bzw. starkes Überdrehen des Motors verschleift werden.

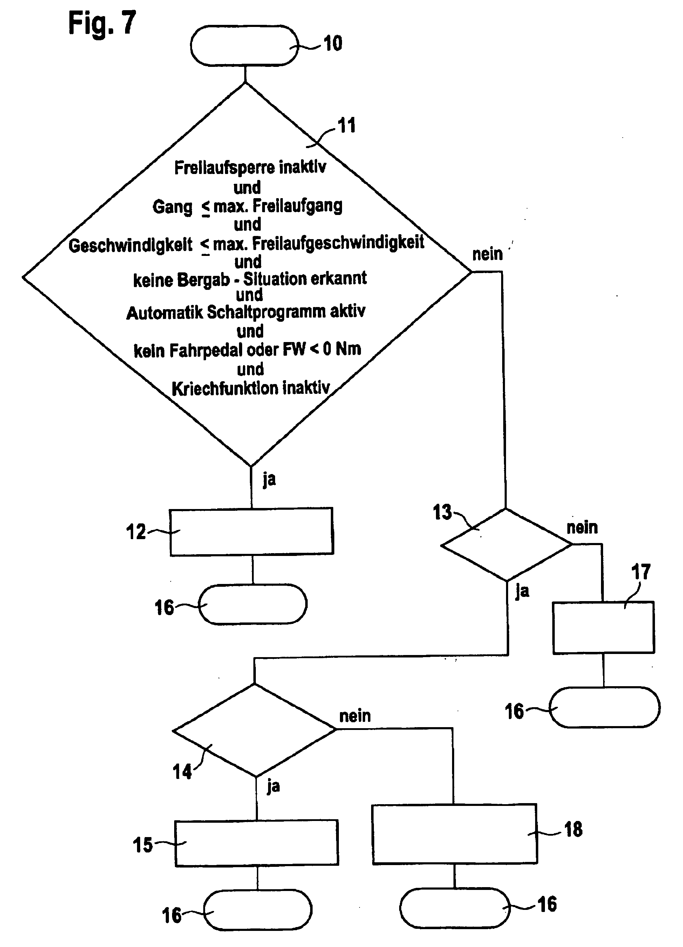

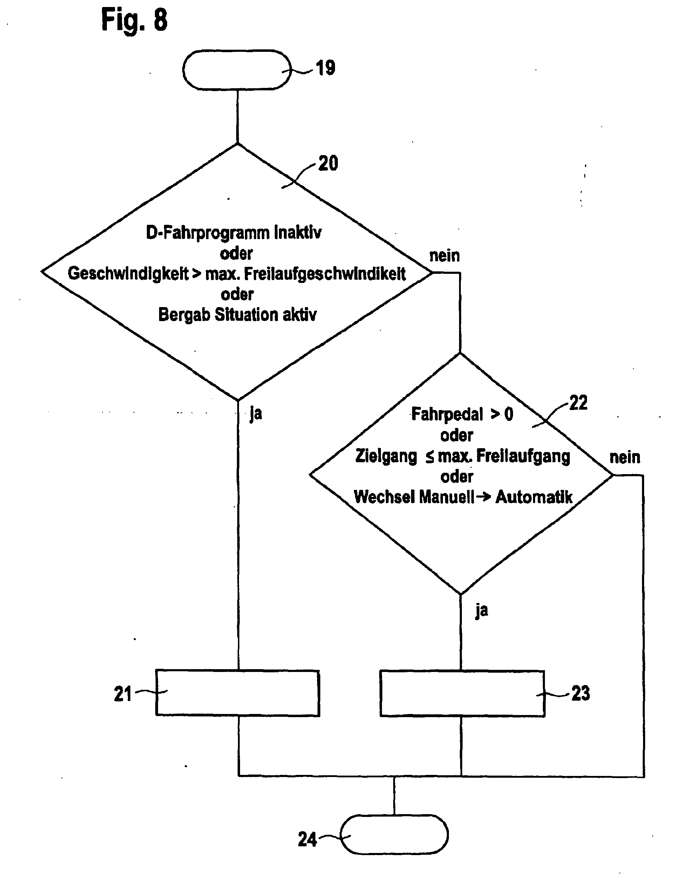

Fig. 7 zeigt ein Flussdiagramm zum Ablauf der Freilauffunktion, entsprechend zeigt Fig. 8 ein Flussdiagramm zur Bestimmung der Freilaufsperre. Nach einem Startzeitpunkt 10 in Fig. 7 wird zunächst in einem ersten Prüfschritt 11 geprüft, ob die Freilaufsperre inaktiv ist und der Gang kleiner oder gleich dem maximalen Freilaufgang ist und die Geschwindigkeit kleiner oder gleich der maximalen Freilaufgeschwindigkeit ist und keine Bergab-Situation erkannt ist und ein Automatik-Schaltprogramm aktiv ist und kein Fahrpedal betätigt oder das Fahrerwunschmoment kleiner Null Newtonmeter ist und die Kriechfunktion inaktiv ist. Ist dies alles der Fall, so wird eine Freilaufphase 12 eingeleitet und die Kupplung geöffnet. Ist dies nicht der Fall, so wird in einem zweiten Prüfschritt 13 geprüft, ob das Fahrpedal betätigt ist oder das Fahrerwunschmoment größer als Null Newtonmeter ist. Ist dies der Fall, so wird in einem dritten Prüfschritt 14 geprüft, ob die Motordrehzahl größer als die Getriebedrehzahl ist. Ist dies der Fall, so liegt eine Einkuppelphase mit Einkuppeln im Zug 15 vor, worauf der gesamte Prüfdurchlauf mit einem Ende 16 beendet wird. Wurde der zweite Prüfschritt 13 verneint, so liegt eine Einkuppelphase mit Einkuppeln im Schub bzw. mit einem Kriechmoment im Aufbau 17 vor, worauf wiederum das Ende 16 angesteuert wird. Wurde der dritte Prüfschritt 14 verneint, so liegt eine Hochlaufphase, bei der ein kleines Kupplungsmoment angelegt werden soll 18, vor, worauf wiederum das Ende 16 angesteuert wird.

Fig. 8 zeigt ein Flussdiagramm zur Bestimmung der Freilaufsperre. Nach dem Start 19 wird zunächst in einem Schritt 20 geprüft, ob ein Dauerfahrprogramm inaktiv ist oder die Geschwindigkeit größer der maximalen Freilaufgeschwindigkeit ist oder eine Bergab-Situation aktiviert ist. Ist dies der Fall, so wird in einem Schritt 21 die Freilaufsperre aktiviert. Wurde die Prüfung in Schritt 20 verneint, so wird zunächst in einem Schritt 22 geprüft, ob das Fahrpedal betätigt und somit größer Null ist oder der Zielgang kleiner oder gleich dem maximalen Freilaufgang oder ein Wechsel zwischen manueller Schaltung und Automatikschaltung vorliegt. Ist dies der Fall, so wird in einem Schritt 23 die Fahrlaufsperre deaktiviert. Wurde die Prüfung in Schritt 22 verneint, so wird das Programm direkt in Schritt 24 beendet.

### Bezugszeichenliste

- n: Drehzahl
- n_{M}: Motordrehzahl
- M: Moment
- M_{M}: Motormoment
- M_{K}: Kupplung
- n_{G}: Getriebedrehzahl
- t: Zeit
- 1: Leerlaufdrehzahl
- 2: Motordrehzahl
- 3: Beginn Freilaufphase
- 4: Schleppmoment
- 5: Freilaufmoment
- 6: Freilaufphase
- 7: Hochlaufphase
- 8: Einkuppelphase
- 9: Kupplungsschließzeitpunkt
- 10: Startpunkt
- 11: Erster Prüfschritt
- 12: Freilaufphase
- 13: Zweiter Prüfschritt
- 14: Dritter Prüfschritt
- 15: Einkuppelphase
- 16: Ende
- 17: Einkuppeln im Schub / Kriechmomentenaufbau
- 18: Hochlaufphase mit kleinem Kupplungsmoment
- 19: Start
- 20: Prüfung Dauerfahrprogramm, Geschwindigkeit, etc.
- 21: Aktivierung Freilaufsperre
- 22: Fahrpedal betätigt?
- 23: Deaktivierung Freilaufsperre
- 24: Ende

## Patentansprüche

1. Verfahren zur Steuerung einer Kupplung, die zwischen einem Antriebsmotor und einem automatischen Schaltgetriebe eines Antriebsstranges, das in einem automatischen und einem manuellen Fahrprogramm betreibbar ist, mit einer Freilauffunktion, **dadurch gekennzeichnet, dass** die Kupplung im Schubbetrieb zur Realisierung der Freilauffunktion geöffnet wird, wenn das Getriebe in ein Automatik-Fahrprogramm geschaltet ist und die Freilauffunktion im Schubbetrieb gesperrt wird, wenn kein Automatik-Fahrprogramm aktiviert ist.

2. Verfahren nach Anspruch 1, **dadurch gekennzeichnet, dass** die Kupplung zur Realisierung der Freilauffunktion geöffnet wird, wenn der Fahrgang kleiner oder gleich einem maximalen Freilaufgang ist.

3. Verfahren nach einem der vorhergehenden Ansprüche, **dadurch gekennzeichnet, dass** die Kupplung zur Realisierung der Freilauffunktion geöffnet wird, wenn das Fahrpedal nicht betätigt wird.

4. Verfahren nach einem der vorhergehenden Ansprüche, **dadurch gekennzeichnet, dass** die Kupplung zur Realisierung der Freilauffunktion geöffnet wird, wenn ein Leerlaufschalter aktiviert ist.

5. Verfahren nach einem der vorhergehenden Ansprüche, **dadurch gekennzeichnet, dass** die Kupplung zur Realisierung der Freilauffunktion geöffnet wird, wenn das Fahrerwunschmoment kleiner als Null ist.

6. Verfahren nach einem der vorhergehenden Ansprüche, **dadurch gekennzeichnet, dass** die Kupplung zur Realisierung der Freilauffunktion geöffnet wird, wenn die Fahrgeschwindigkeit kleiner als die maximale Freilaufgeschwindigkeit ist.

7. Verfahren nach einem der vorhergehenden Ansprüche, **dadurch gekennzeichnet, dass** die Kupplung zur Realisierung der Freilauffunktion geöffnet wird, wenn keine Bergab-Fahrt erkannt wird.

8. Verfahren nach einem der vorhergehenden Ansprüche, **dadurch gekennzeichnet, dass** die Kupplung zur Realisierung der Freilauffunktion geöffnet wird, wenn eine Kriechfunktion nicht aktiviert ist.

9. Verfahren nach einem der vorhergehenden Ansprüche, **dadurch gekennzeichnet, dass** die Kupplung zur Realisierung der Freilauffunktion geöffnet wird, wenn keine Sperrung der Freilauffunktion vorliegt.

10. Verfahren nach einem der vorhergehenden Ansprüche, **dadurch gekennzeichnet, dass** die Freilauffunktion gesperrt wird, wenn die Fahrgeschwindigkeit größer als die maximale Freilaufgeschwindigkeit ist.

11. Verfahren nach einem der vorhergehenden Ansprüche, **dadurch gekennzeichnet, dass** die Freilauffunktion gesperrt wird, wenn ein Bergprogramm aktiviert ist.

12. Verfahren nach einem der vorhergehenden Ansprüche, **dadurch gekennzeichnet, dass** die Sperrung der Freilauffunktion deaktiviert wird, wenn das Fahrpedal betätigt wird oder das Fahrerwunschmoment größer als Null ist.

13. Verfahren nach einem der vorhergehenden Ansprüche, **dadurch gekennzeichnet, dass** die Sperrung der Freilauffunktion deaktiviert wird, wenn ein Wechsel von einem manuellen in ein Automatik-Fahrprogramm erfolgt.

14. Verfahren nach einem der vorhergehenden Ansprüche, **dadurch gekennzeichnet, dass** die Sperrung der Freilauffunktion deaktiviert wird, wenn ein Gangwechsel mit einem Fahrgang kleiner oder gleich dem maximalen Freilaufgang erfolgt.

15. Antriebsstrang insbesondere für ein Kraftfahrzeug, umfassend einen Antriebsmotor, ein Schaltgetriebe, eine diese verbindende Kupplung, **dadurch gekennzeichnet, dass** der Antriebsstrang eine Steuerung, zur Durchführung des Verfahrens nach einem der vorhergehenden Ansprüche umfasst.

## Claims

1. A method for controlling a clutch which is operable between a drive engine and an automatic gear-changing transmission of a power train in an automatic and a manual driving program, having a free-wheeling function,
**characterized in that** the clutch is disengaged under deceleration to realize the free-wheeling function if the transmission is shifted into an automatic driving program, and the free-wheeling function is blocked under deceleration if no automatic driving program is activated.

2. A method according to Claim 1,
**characterized in that** the clutch is disengaged to realize the free-wheeling function if the driving gear is lower than or equal to a maximum free-wheeling gear.

3. A method according to one of the preceding claims,
**characterized in that** the clutch is disengaged to realize the free-wheeling function if the accelerator pedal is not operated.

4. A method according to one of the preceding claims,
**characterized in that** the clutch is disengaged to realize the free-wheeling function if an idle switch is activated.

5. A method according to one of the preceding claims,
**characterized in that** the clutch is disengaged to realize the free-wheeling function if the driver's desired torque is less than zero.

6. A method according to one of the preceding claims,
**characterized in that** the clutch is disengaged to realize the free-wheeling function if the driving speed is lower than the maximum free-wheeling speed.

7. A method according to one of the preceding claims,
**characterized in that** the clutch is disengaged to realize the free-wheeling function if downhill travel is not detected.

8. A method according to one of the preceding claims,
**characterized in that** the clutch is disengaged to realize the free-wheeling function if a creeping function is not activated.

9. A method according to one of the preceding claims,
**characterized in that** the clutch is disengaged to realize the free-wheeling function if no blockage of the free-wheeling function is present.

10. A method according to one of the preceding claims,
**characterized in that** the free-wheeling function is blocked if the driving speed is greater than the maximum free-wheeling speed.

11. A method according to one of the preceding claims,
**characterized in that** the free-wheeling function is blocked if an uphill program is activated.

12. A method according to one of the preceding claims,
**characterized in that** the blocking of the free-wheeling function is deactivated if the accelerator pedal is operated or the driver's desired torque is greater than zero.

13. A method according to one of the preceding claims,
**characterized in that** the blocking of the free-wheeling function is deactivated when a change from a manual to an automatic driving program occurs.

14. A method according to one of the preceding claims,
**characterized in that** the blocking of the free-wheeling function is deactivated if a gear change occurs with a driving gear lower than or equal to the maximum free-wheeling gear.

15. A power train, in particular for a motor vehicle, comprising a drive engine, a gear-changing mechanism and a clutch joining these,
**characterized in that** the power train includes a controller for carrying out the method according to one of the preceding claims.

## Revendications

1. Procédé pour commander un embrayage qui est disposé entre un moteur d'entraînement et une boîte de vitesses à changement de rapports automatique d'une ligne de transmission d'entraînement, la boîte pouvant fonctionner selon un programme de marche automatique ou manuel, et l'ensemble présentant une fonction de marche en roue libre, **caractérisé en ce que** l'on ouvre l'embrayage en mode propulsion pour réaliser la fonction de marche en roue libre lorsque la boîte de vitesses est commutée dans un programme de marche automatique, et l'on bloque la fonction de marche en roue libre dans le mode propulsion si aucun programme de marche automatique n'est activé.

2. Procédé selon la revendication 1, **caractérisé en ce que** l'on ouvre l'embrayage pour réaliser la fonction de marche en roue libre, lorsque le rapport de marche est plus petit ou identique à un rapport de marche en roue libre maximal prédéfini.

3. Procédé selon l'une des revendications précédentes, **caractérisé en ce que** l'on ouvre l'embrayage pour réaliser la fonction de marche en roue libre, lorsque la pédale d'accélérateur n'est pas actionnée.

4. Procédé selon l'une des revendications précédentes, **caractérisé en ce que** l'on ouvre l'embrayage pour réaliser la fonction de marche en roue libre, lorsqu'un commutateur de ralenti est activé.

5. Procédé selon l'une des revendications précédentes, **caractérisé en ce que** l'on ouvre l'embrayage pour réaliser la fonction de marche en roue libre, lorsque le couple souhaité par le conducteur est inférieur à zéro.

6. Procédé selon l'une des revendications précédentes, **caractérisé en ce que** l'on ouvre l'embrayage pour réaliser la fonction de marche en roue libre, lorsque la vitesse de marche est inférieure à la vitesse maximale de marche en roue libre.

7. Procédé selon l'une des revendications précédentes, **caractérisé en ce que** l'on ouvre l'embrayage pour réaliser la fonction de marche en roue libre, lorsqu'on ne détecte aucun mode de marche en descente.

8. Procédé selon l'une des revendications précédentes, **caractérisé en ce que** l'on ouvre l'embrayage pour réaliser la fonction de marche en roue libre, lorsqu'une fonction de marche très lente ou marche tout terrain n'est pas activée.

9. Procédé selon l'une des revendications précédentes, **caractérisé en ce que** l'on ouvre l'embrayage pour réaliser la fonction de marche en roue libre, si aucun blocage de la fonction de marche en roue libre n'est présent.

10. Procédé selon l'une des revendications précédentes, **caractérisé en ce que** la fonction de marche en roue libre est bloquée lorsque la vitesse de marche est supérieure à la vitesse maximale de marche en roue libre.

11. Procédé selon l'une des revendications précédentes, **caractérisé en ce que** la fonction de marche en roue libre est bloquée lorsqu'un programme montagne est activé.

12. Procédé selon l'une des revendications précédentes, **caractérisé en ce que** le blocage de la fonction de marche en roue libre est désactivé lorsque la pédale d'accélérateur est actionnée ou que le couple souhaité par le conducteur est supérieur à zéro.

13. Procédé selon l'une des revendications précédentes, **caractérisé en ce que** le blocage de la fonction de marche en roue libre est désactivé lorsque s'effectue un changement d'un programme de marche manuel à un programme de marche automatique.

14. Procédé selon l'une des revendications précédentes, **caractérisé en ce que** le blocage de la fonction de marche en roue libre est désactivé lorsque l'on effectue un changement de rapport avec un rapport de marche plus petit ou identique au rapport de marche en roue libre maximal.

15. Ligne de transmission d'entraînement, notamment destinée à un véhicule automobile, comprenant un moteur d'entraînement, une boîte de vitesses à changement de rapports, et un embrayage reliant ces deux éléments, **caractérisée en ce que** la ligne de transmission d'entraînement comprend une commande pour la mise en oeuvre du procédé selon l'une des revendications précédentes.
